# EUROPEAN PATENT APPLICATION

(11) **EP 4 318 834 A1**
(43) Date of publication of application: **07.02.2024**
(21) Application number: 22188422.4
(22) Date of filing: 03.08.2022
(51) Int. Cl.: H02G 3/04, A62C 2/06, A62C 3/16, F16L 5/04, F16L 5/10, H02G 3/22

(54) **FOAM AND MESH CLOSURE MECHANISM FOR A FIRE AND SMOKE SEAL OF A CABLE LEAD-THROUGH**

(71) Applicant: Hilti Aktiengesellschaft, 9494 Schaan (LI)
(72) Inventor: Voss, Brendan, 80798 München (DE)
(74) Representative: Hilti Aktiengesellschaft Corporate Intellectual Property

(57) **Abstract**

The invention relates to an automated closing mechanism (1) for sealing a conduit lead-through in a wall, comprising:
- a foam insert (2) configured and shaped to be inserted into the lead-through, thereby closing and sealing its opening cross-section, the insert (2) being formed by at least two insert parts (2a, 2b) which are at least partly separable from each other and abut against each other along an inner separation surface (3) extending within the insert (2) in its initial closed state, so as to tightly enclose conduits (7) fed between them when the insert (2) is inserted in the lead-through;
- a mesh inlay (4) integrated within or permanently attached to at least one of said insert parts (2a, 2b) and extending along said inner separation surface (3); and
- a mechanical opening device (8) connected to said mesh inlay (4) and configured to transfer an opening force (F) to the mesh inlay (4) to deform it, thereby causing a compression of the respective insert part(s) (2a, 2b), such that a separation opening (6) is created between said insert parts (2a, 2b) allowing to remove or insert conduits (7);
- the foam insert (2) and the mesh inlay (4) being reversibly deformable such that said separation opening (6) automatically closes by inherent material recovery properties of the foam causing the insert (2) to return to its initial closed state when the force (F) is removed.

## Description

### FIELD OF THE INVENTION

The invention relates to a closing mechanism for sealing a conduit lead-through in a wall, in particular in a firewall. The invention also relates to a method of a retrofitting installation or removal of conduits, such as cabling or pipes, in an existing lead-through using such a closing mechanism.

### Description of the prior art

Penetrations through firewalls must be sealed against smoke and fire to ensure that the firewall integrity is maintained. In cases when penetrations must be re-opened, for example with the installation or removal of cabling in an existing conduit lead-through, the firestopping solution must be reinstalled or provide some means of resealing the penetration.

Therefore, various mechanical solutions for a retrofitting installation or removal of conduits in an existing lead-through provided in a wall are known in the prior art, as described, for example, in US 2008/0128998 A1, US 2004/0016193 A1, US 2012/0012347 A1, US 2006/0037264 A1, US 2006/0006611 A1, US 2011/0094759 A1, or US 8,745,944 B1. However, all these retrofitting solutions require an active, typically manual, re-closing of the lead-through in order to seal it against smoke and fire again.

There is, however, a demand for firestopping systems that allow for frequent opening/closing of the penetration for the installation/removal of cables without the need for destruction of the mechanical sealing solution or manual re-closing of the penetration.

### Summary of the invention

To solve this problem, an automated closing mechanism for sealing a conduit lead-through in a wall, in particular in a firewall, and a corresponding method of installation and/or removal of conduits are provided as defined in the independent claims. Further embodiments are specified in the dependent claims. All the features described in the following description and in the claims for the automated closing mechanism are also valid, in a corresponding manner, for the method, and vice versa.

According to a first aspect, an automated closing mechanism for sealing a conduit lead-through in a wall, such as a firewall, is provided. The automated closing mechanism proposed herein comprises a reversibly compressible foam insert which is configured and shaped so as to be inserted into the lead-through, thereby closing and sealing its opening cross-section. The insert is formed by at least two insert parts which are at least partly separable from each other along an inner separation surface which extends within the insert.

In an initial closed state of the insert, said insert parts abut against each other along said inner separation surface, so as to tightly enclose conduits fed between them when the insert is inserted in the lead-through.

The automated closing mechanism further comprises a reversibly deformable mesh inlay integrated within or permanently attached to at least one of said insert parts. The mesh inlay extends along said inner separation surface of the insert. The mesh inlay may, for example, lie in said inner separation surface or extend approximately in parallel thereto. This is, however, not indispensable for the functionality proposed herein, i.e. the mesh inlay may also have an orientation different from that of the inner separation surface inside the insert.

Further, the automated closing mechanism comprises a mechanical opening device which is connectable or connected to said mesh inlay and configured to transfer an opening force applied at the device from the outside of the insert to the mesh inlay, so as to reversibly deform it. The mechanical opening device is configured such that, by application of the opening force, a compression of the respective insert part(s) is caused by the mesh inlay integrated therein or attached thereto, so that a separation opening is created between said insert parts allowing to remove or insert conduits.

In the automated closing mechanism proposed herein, the foam insert and the mesh inlay are reversibly deformable/compressible such that said separation opening automatically closes by inherent material recovery properties of the foam which make the insert return to its initial closed state when the force applied at the device is removed. The mesh inlay may be fabricated of any natural or synthetic material showing sufficient flexibility for this functionality, such as plastics or fiber-reinforced plastics.

In other words, the solution proposed herein involves an automated closing mechanism suitable e. g. for fire-rated through-penetrations. The closing mechanism utilizes a flexible foam insert that may be deformed or compressed so as to create a separating opening between its two (or more) separable insert parts for re-penetration of conduits, and then said opening closes on its own when the opening force, which caused the deformation/compression, is removed from the insert. The automated closing is effected by foam recovering to its initial form. The deformation creating said separation opening is achieved via a mechanical opening device, e.g. based on mechanical leveraging, which allows to apply a suitable opening force from the outside of the insert to a flexible mesh provided within the insert. The mesh inlay extends within the insert along said inner separation surface, i.e. along or in the surface or plane of the separation opening.

Once mechanical leverage is applied to the mesh and the foam is compressed, a separation opening is created allowing for cabling to pass through. Upon release/deactivation of the mechanical opening device, the foam insert relaxes to its original configuration sealing around the cables and providing, for example, smoke tightness and/or fire stop properties for the penetration. The foam insert is fitted to the size and shape of the opening cross-section of the penetration pathway of the lead-through, which may be, for instance, configured as a steel tube having a circular or rectangular opening cross-section.

The mechanism proposed herein thus allows for automatic closure and seal around conduits (such as cables) in a lead-through (also denoted as penetration) based on material properties of the foam. The recovery and closure of the penetration occurs automatically as a result of the inherent material recovery properties of the foam. Suitable foam insert density and recovery characteristics can range to provide various rates and levels of recovery and seal, depending on the requirements of a specific application. For example, an open cell foam material may be particularly well-suited for better compressive properties in comparison with closed cell foam material.

In order to create a separation opening which allows to easily remove or exchange conduits in the lead-through, an activation of the mechanical opening device by applying a suitable opening force, e.g. in a pre-determined direction and/or having a magnitude in a pre-determined force interval, is required. For an easy and intuitive activation, the mechanical opening device may, for example, be configured as a leverage device and/or be configured for manual application of the opening force by a human hand. A suitable leveraging device may include any mechanical device that allows for the deformation of the foam insert by a human hand. To this end, the device may, for example, employ cabling which is pulled to deform the foam insert:
According to an embodiment, the mechanical opening device comprises at least one pull cable, each pull cable having a first end connected to the mesh inlay of the insert and an opposite second end arranged outside of the insert such that the opening force is a pulling force to be applied at said second end(s) of said pull cable(s). Such a construction may be particularly simple and easy to manufacture and to operate by a person.

According to an embodiment, in the initial closed state of the insert, said inner separation surface has a substantially planar shape. This may, particularly, be the case when the insert is not yet inserted in the lead-through and without conduits being received between its insert parts, since both will be typically accompanied by a certain degree of deformation of the insert due to a pre-compression of its foam material needed for the sealing function. A planar inner separation surface may be, for example, most easy to manufacture and/or to operate/handle.

Specifically, the mesh inlay may be integrated within (e.g. deep inside) one or both of the adjacent insert parts. In other words, it may extend at a predetermined (e.g. constant) distance measured from the inner separation surface in a perpendicular direction. Thereby, for example, a particularly good sealing function of the insert may be achieved around the conduits due to compressive properties of the foam material.

The automated closing mechanism proposed herein may be well-suited for firestopping and/or against smoke and/or for acoustic purposes. In order to provide a reliable fire stopping functionality, suitable fire stopping additives known as such in the art may be, for example, contained in the foam material of the insert. Alternatively or additionally, the insert may also comprise fire stopping additives or materials at its inner separation surface and/or at its circumferential outer surface configured to abut against an inner surface of the lead-through and/or in the mesh inlay.

In the initial closed state of the insert, particularly when it is not yet inserted in the lead-through and without conduits being received between its insert parts, a circumferential outer surface of the insert configured to abut against an inner surface of the lead-through may have a substantially cylindrical shape having, for example, a circular or rectangular cross-section. In general, the foam insert of the present automated closure mechanism can be molded to numerous shapes, not limited to examples described herein above and below. A cylindrical circumferential outer surface of the insert may, for example, have a cross-section of a similar geometric shape and a (slightly) larger size than a cross-section of a cylindrical lead-through channel, such as, for example, to provide a reliable sealing function and to make the insert easy to insert and to align inside the lead-through channel.

Alternatively or additionally, the insert may be formed by exactly two insert parts having, for example, similar or identical shapes and arranged substantially symmetrically to each other with respect to the inner separation surface. For example, for an approximately cylindrical lead-through channel having a circular cross-section, the two insert parts may have similar or identical semi-circular cross-sections. In case of a rectangular lead-through channel, the two insert parts may have similar or identical rectangular, triangular or irregular trapezoid cross-sections yielding a rectangular cross-section together.

The automated closing mechanism may further comprise a lead-through housing in form of an axial channel configured to be permanently installed in a wall through-penetration, such that an inner surface of the housing forms an inner surface of the lead-through and an outer surface of the housing is sealed against the wall. For example, the housing may be cast-in in the wall.

In this case, a circumferential outer surface of the insert may be shaped and sized so as to abut against said inner surface of the housing along the whole length of its radial perimeter, thereby closing and sealing its opening cross-section when the insert is inserted in the lead-through. As mentioned above, this may be, for example, achieved in that the radial cross-section of the insert in its initial closed state, when it is not inserted in the housing, has a geometrical shape similar or same to that of the radial cross-section of the inner surface of the housing and a slightly larger size, so that the foam material of the insert is in a pre-compressed state when the insert is inserted in the lead-through, thereby closing and sealing its opening cross-section.

As a further aspect, a method of installation or removal of conduits in a conduit lead-through in a wall (such as a firewall) using an automated closing mechanism proposed herein is provided. The method comprises the steps:
- applying an opening force at said mechanical opening device when of the insert in its initial closed state, so that the opening force is transferred by the device to the mesh inlay of the insert, thereby deforming the mesh inlay and causing a compression of the respective foam insert part(s) by the mesh inlay integrated therein or attached thereto, such that a separation opening is created in the insert between said insert parts;
- inserting conduits, such as cables or pipes, into said separation opening or removing them therefrom; and
- releasing the device by removing the opening force applied thereto, thus causing the separation opening to automatically close by inherent material recovery properties of the foam, so that the insert returns to its initial closed state sealing the lead-through around the conduits.

### Brief description of the drawings

The above aspects of the invention and their exemplary embodiments and specific configurations will be explained in the following in more detail with reference to the attached drawings. The drawings are mainly schematic. Therefore, they are not necessarily true to scale. There show
- Fig. 1a: a cross-sectional view of an automated closing mechanism according to an exemplary embodiment of the invention, with its foam insert in its initial closed state and without conduits being received between its two separable insert parts;
- Fig. 1b: the mechanism of Fig. 1a after a separation opening has been created between the two insert parts by an opening force and conduits have been inserted therein;
- Fig. 1c: the mechanism of Fig. 1b after removing the opening force, with its foam insert automatically recovered to its initial closed state, thereby sealing the conduits received between its insert parts;
- Fig. 2a: an exploded perspective view of an insert part of an automated closing mechanism according to another embodiment, revealing an integrated mesh inlay extending within the insert part;
- Fig. 2b: another exploded perspective view of the insert part of Fig. 2a, revealing a part of the integrated mesh inlay extending therein;
- Fig. 2c: a perspective view of the insert part of Fig. 2b in its final configuration, with the integrated mesh inlay hidden in-side it;
- Fig. 2d: a perspective view of an automated closing mechanism according to an exemplary embodiment of the invention, with an insert in its closed state formed by two insert parts, one of them being the insert part of Fig. 2b, and with an opening device based on pulling cables;
- Fig. 2e: the mechanism of Fig. 2d after a separation opening has been created between the two insert parts by an opening force applied via the pulling cables at the mesh inlay;
- Fig. 2f: the mechanism of Fig. 2e after the opening force was removed and the foam insert has automatically recovered to its initial closed state, thereby sealing the conduits received between its two insert parts;
- Fig. 3a: a perspective view of a circular insert according to an exemplary embodiment of the invention formed by two insert parts with identical semi-circular cross-sections, in its initial closed state;
- Fig. 3b: a perspective view of the upper insert part of the insert of Fig. 3a with its mesh inlay in its non-deformed state;
- Fig. 3c: a perspective view of the insert part of the insert of Fig. 3b deformed and compressed by an opening force applied via an opening device to its mesh inlay to create a separation opening within the insert;
- Fig. 4a: a perspective view of a rectangular insert according to an exemplary embodiment of the invention formed by two insert parts with identical triangular cross-sections, in its initial closed state;
- Fig. 4b: a perspective view of the upper insert part of the insert of Fig. 4a with its mesh inlay in its non-deformed state;
- Fig. 4c: a perspective view of the insert part of the insert of Fig. 4b deformed and compressed by an opening force applied via an opening device to its mesh inlay to create a separation opening within the insert;
- Fig. 5a: a cross-sectional view of the insert of Fig. 3a, in its initial closed state, showing the mesh inlay within the upper insert part;
- Fig. 5b: a cross-sectional view of the insert of Fig. 5a with its upper insert part deformed and compressed by an opening force applied via an opening device to its mesh inlay, so that a separation opening is created between the two insert parts;
- Fig. 6a: a cross-sectional view of the insert of Fig. 4a, in its initial closed state, with mesh inlays provided within both the upper and the lower insert parts;
- Fig. 6b: a cross-sectional view of the insert of Fig. 6a with its upper insert part deformed and compressed by an opening force applied via an opening device to its mesh inlay, so that a separation opening is created between the two insert parts.

### Detailed description of exemplary embodiments of the invention

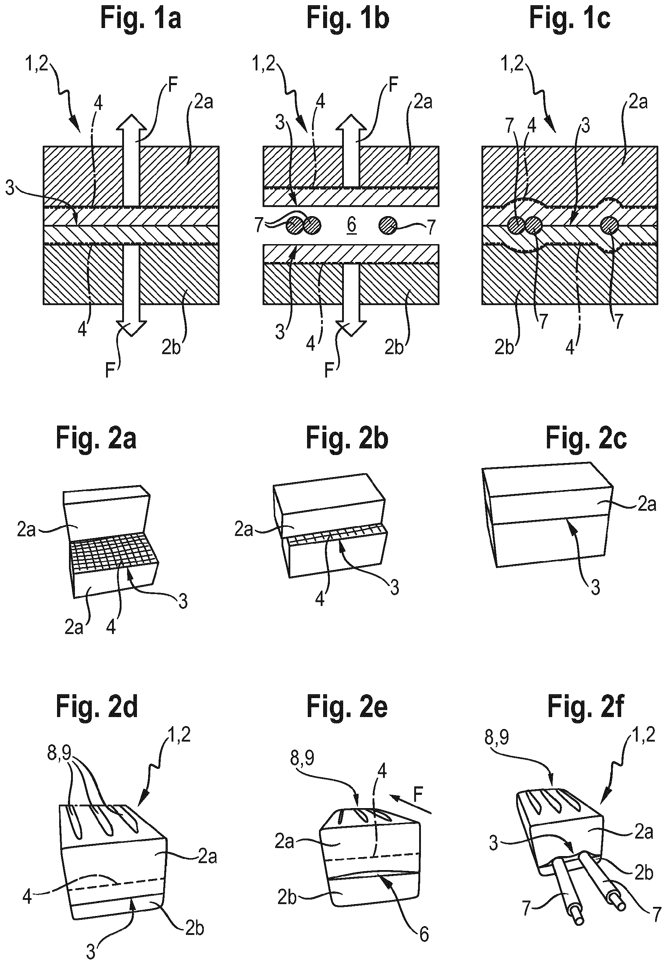

Figs. 1-6b schematically illustrate several exemplary embodiments of an automated closing mechanism proposed herein and its constituent parts, which are described in more detail in the above description and in the appended claims. Any of the specific features and feature combinations of the automated closing mechanism as set forth in the above description and in the claims may be implemented in the embodiments shown in the Fig. 1-6b, even if not explicitly shown or described in the following to avoid repetitions.

Fig. 1a shows a cross-sectional view of an automated closing mechanism 1 according to an exemplary embodiment of the invention, with its foam insert 2 in its initial closed state and without conduits being received between its two separable insert parts 2a and 2b. In this example, the insert 2 has a rectangular cross-section and is formed by two substantially identical insert parts 2a and 2b, which are symmetrically arranged with respect to an inner separation surface 3 (here a plane) extending within the insert 2 between the two separable insert parts 2a and 2b.

As shown in Fig. 1a, in the initial closed state of the insert 2, its insert parts 2a and 2b abut against each other in a tightly sealing manner. The insert 2 is configured and shaped such as to be inserted in a conduit lead-through (not shown), e.g. in a firewall, so as to close and seal its opening cross-section against noise, smoke and/or fire.

In this example, both insert parts 2a and 2b are provided with an integrated flexible mesh inlay 4 which extends within either insert part 2a/2b in parallel with the inner separation surface 3 at a pre-determined distance from it.

As schematically indicated by arrows in Figs. 1a, 1b and 1c, by applying an opening force F to a mechanical opening device, such as a leverage device 8 (not shown in Fig. 1a, cf. Fig. 2d-2f) configured to transfer the opening force F to the mesh inlay 4, the flexible mesh inlay 4 is reversibly deformable, thereby causing the respective insert part 2a/2b to a deformation/compression so as to create a separation opening 6 between the adjacent insert parts 2a/2b. The separation opening 6 allows to insert or remove conduits between the insert parts 2a/2b.

So, Fig. 1b shows the mechanism 1 of Fig. 1a after the separation opening 6 has been created between the two insert parts 2a/2b by an opening force F, and conduits 7 (cables in this example) have been inserted therein.

In Fig. 1c, the mechanism 1 is shown after the opening force F has been removed, with the foam insert 2 automatically recovered to its initial closed state, thereby sealing the conduits 7 received between its insert parts 2a and 2b.

As described herein above in more detail, this automated closing of the mechanism 1 is provided by inherent material properties of the foam material, which recovers to its initial form on its own as soon as the mechanical deformation/opening force F is removed. The deformation creating the separation opening 6 is achieved via a mechanical opening device 8 (not shown in Fig. 1a-1c, see for example Fig. 2d-2f), e.g. based on mechanical leveraging, which allows to apply a suitable opening force F from the outside of the insert 2 to the flexible mesh inlay 4 provided within the insert 2.

Therefore, the automated closure and sealing concept proposed herein is based on very simple and efficient mechanical principles (foam and mesh) making the mechanism 1 both easy to manufacture and easy to operate. That is, no active or manual re-closing and re-sealing of the insert 2 is needed after a retrofitting inserting, exchanging or removal of the conduits 7 in the lead-through has been performed.

Further examples illustrating this sealing concept are shown in Figs. 2a-6b:
Fig. 2a shows an exploded perspective view of an insert part 2a of an automated closing mechanism 1 according to an embodiment of the invention, the exploded view revealing an integrated mesh inlay 4 extending within the insert part 2a. Similarly to the example shown in Fig. 1a-1c, the mesh inlay 4 extends in Fig. 2a within the insert part 2a in parallel with an inner separation surface 3 of the insert 2 (only shown as a whole in Fig. 2d-2f) at a pre-determined distance from it.

Fig. 2b shows another exploded perspective view of the insert part 2a of Fig. 2a, revealing only a part of the integrated mesh inlay 4 extending therein. Fig. 2c shows a perspective view of the insert part 2a of Fig. 2b in its final configuration, i.e. with the integrated mesh inlay 4 hidden therein.

Fig. 2d shows a perspective view of the automated closing mechanism 1 with an insert 2 in its closed state formed by two insert parts 2a and 2b, one of them being the insert part 2a of Fig. 2b, and with a mechanical opening device 8 based on pulling cables 9. That is, in this example, the mechanical opening device 8 of the mechanism 1 comprises several pull cables 9 (in Fig. 2d three cables 9, by way of example only), each pull cable 9 having a first end connected to the mesh inlay 4 of the insert 2 and an opposite second end arranged outside of the insert 2 such that the opening force F mentioned herein is a pulling force to be applied at said second ends of the pull cables 9. Such a construction may be particularly simple and easy to manufacture and to operate by any person.

In the example prototype of Fig. 2a-2e, the opening force F is a mechanical leveraging force achieved using pull cables 9. However, any mechanism that can apply enough force F to the mesh inlay 4 to deform the foam could be used instead.

Furthermore, foam insert 2 can be molded to numerous shapes, not limited to examples as shown in the Figures 1-6b. The choice of a suitable shape of the insert 2 depends on the shape of the lead-through to be closed and sealed by the mechanism 1 as proposed herein.

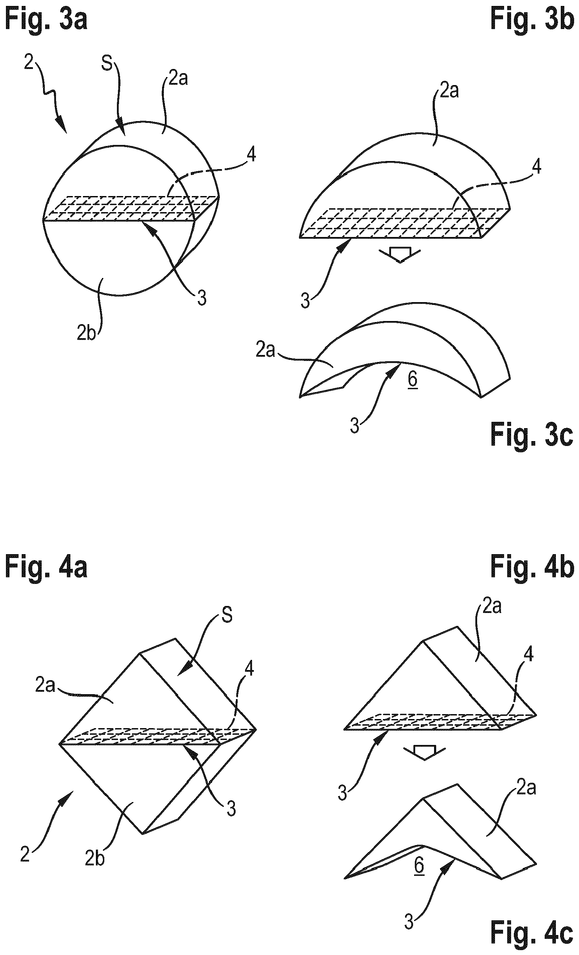

Fig. 3a shows a perspective view of a circular insert 2 of an automated closing mechanism 1 according to another exemplary embodiment of the invention, the insert 2 being formed by two insert parts 2a and 2b with identical semi-circular cross-sections. To be more precise, in this example, a circumferential outer surface S of the insert 2, which is configured to abut against an inner surface of the lead-through, has a substantially circular cylindrical shape.

In Fig. 3a, the insert 2 is shown in its initial closed state. Similarly to the previous examples, the mesh inlay 4 extends within the insert part 2a in parallel with an inner separation surface 3 of the insert 2 at a pre-determined distance from it.

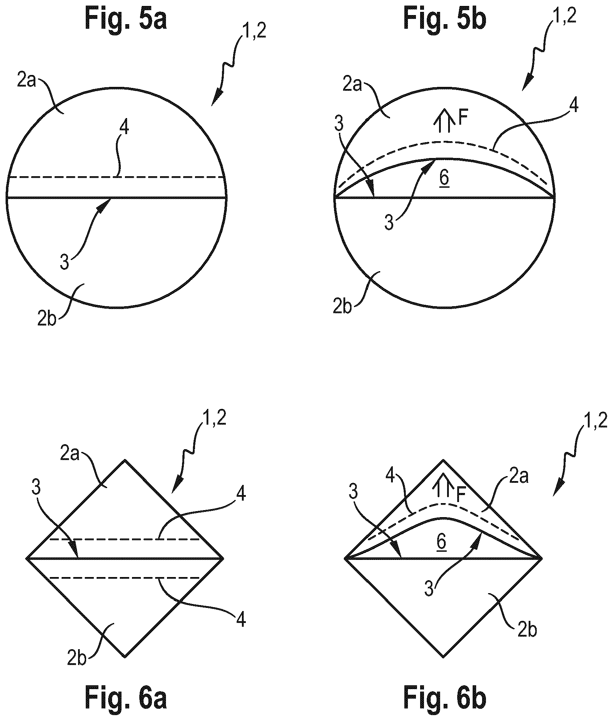

To illustrate the process of creating a separation opening 6 (cf. Fig. 5b) at the inner separation surface 3 of the insert 2, Fig. 3b once again shows a perspective view of the upper insert part 2a of Fig. 3a with its mesh inlay 4 in its non-deformed state, whereas Fig. 3c shows the insert part 2a when it is deformed and compressed by an opening force F applied via an opening device 8 (e.g. such as shown in Fig. 2d-2f) to its mesh inlay 4.

The example shown in Figs. 4a-4c only differs from that of Figs. 3a-3c in the geometry of the insert 2, which has a rectangular cross-section provided by two insert parts 2a and 2b having triangular cross-sections of approximately identical shapes and sizes and arranged symmetrically with respect to the inner separation surface 3 of the insert 2.

Fig. 5a further shows a cross-sectional view of the insert 2 of Fig. 3a, in its initial closed state, showing the mesh inlay 4 within the upper insert part 2a. Fig. 5b shows a cross-sectional view of the insert 2 of Fig. 5a when its upper insert part is deformed and compressed by an opening force F applied via an opening device 8 (not shown in this Figure) to its mesh inlay 4, so that a separation opening 6 is created between the two insert parts 2a and 2b.

Finally, Fig. 6a shows a cross-sectional view of the insert 2 of Fig. 4a in its initial closed state, with mesh inlays 4 provided within both the upper and the lower insert parts 2a and 2b. Fig. 6b shows the insert of Fig. 6a when its upper insert part 2a is deformed and compressed by an opening force F applied via an opening device 8 (not shown in this Figure) to its mesh inlay 4, so that a separation opening 6 is created between the two insert parts 2a and 2b.

## Claims

1. An automated closing mechanism (1) for sealing a conduit lead-through in a wall, comprising:
- a reversibly compressible foam insert (2) configured and shaped so as to be inserted into the lead-through, thereby closing and sealing its opening cross-section, the insert (2) being formed by at least two insert parts (2a, 2b) which are at least partly separable from each other and abut against each other along an inner separation surface (3) extending within the insert (2) in its initial closed state, so as to tightly enclose conduits (7) fed between them when the insert (2) is inserted in the lead-through;
- a reversibly deformable mesh inlay (4) integrated within or permanently attached to at least one of said insert parts (2a, 2b), said mesh inlay (2) extending along, preferably substantially parallel to, said inner separation surface (3); and
- a mechanical opening device (8) connected to said mesh inlay (4) and configured to transfer an opening force (F) applied at the device (8) to the mesh inlay (4) so as to deform the mesh inlay (4) and thereby cause a compression of the respective insert part(s) (2a, 2b), such that a separation opening (6) is created between said insert parts (2a, 2b) allowing to remove or insert conduits (7);
- wherein the foam insert (2) and the mesh inlay (4) are reversibly deformable such that said separation opening (6) automatically closes by inherent material recovery properties of the foam causing the insert (2) to return to its initial closed state when the force (F) applied at the device (8) is removed.

2. The automated closing mechanism (1) of claim 1, wherein
- the mechanical opening device (8) is a leverage device and/or is configured for manual application of the opening force (F) by a human hand.

3. The automated closing mechanism (1) of claim 1 or 2, wherein
- the mechanical opening device (8) comprises at least one pull cable (9), each pull cable (9) having a first end connected to said mesh inlay (4) and an opposite second end arranged outside the insert (2) such that the opening force (F) is a pulling force to be applied at said second end(s) of said pull cable(s) (9).

4. The automated closing mechanism (1) of one of the preceding claims, wherein
- in the initial closed state of the insert (2), said inner separation surface (3) has a substantially planar shape, particularly when the insert (2) is not inserted in the lead-through and without conduits (7) being received between its insert parts (2a, 2b).

5. The automated closing mechanism (1) of one of the preceding claims, wherein
- the mesh inlay (4) is integrated within at least one of said insert parts (2a, 2b) and extends at a predetermined, preferably constant, distance measured in a direction perpendicular to said inner separation surface (3) of the insert (2).

6. The automated closing mechanism (1) of one of the preceding claims, wherein
- the material of the insert (2) is an open cell foam material.

7. The automated closing mechanism (1) of one of the preceding claims, wherein
- the insert (2) comprises fire stopping additives, which are preferably contained in the foam material of the insert (2) and/or at its inner separation surface (3) and/or at its circumferential outer surface (S) configured to abut against an inner surface of the lead-through and/or in the mesh inlay (4).

8. The automated closing mechanism (1) of one of the preceding claims, wherein, in the initial closed state of the insert (2), particularly when the insert (2) is not inserted in the lead-through and without conduits (7) being received between its insert parts (2a, 2b),
- a circumferential outer surface (S) of the insert (2) configured to abut against an inner surface of the lead-through has a substantially cylindrical shape having, for example, a circular or rectangular cross-section; and/or
- said at least two insert parts are two insert parts (2a, 2b), preferably having similar or substantially identical shapes and arranged symmetrically to each other with respect to said inner separation surface (3).

9. The automated closing mechanism (1) of one of the preceding claims, further comprising:
- a lead-through housing forming an axial channel configured to be permanently installed in a wall through-penetration such that an inner surface of the housing forms an inner surface of the lead-through and an outer surface of the housing is sealed against the wall; wherein
- a circumferential outer surface (S) of the insert (2) is shaped and sized so as to abut against said inner surface of the housing along the whole length of its radial perimeter, thereby closing and sealing its opening cross-section when the insert (2) is inserted in the lead-through;
- preferably in that the radial cross-section of the insert (2) in its initial closed state, when it is not inserted in the housing, has a geometrical shape similar or same to that of the radial cross-section of the inner surface of the housing and a slightly larger size.

10. A method of installation and/or removal of conduits (7) in a conduit lead-through in a wall using an automated closing mechanism (1) according to one of the preceding claims, comprising the steps:
- applying an opening force (F) at said mechanical opening device (8) when insert (2) in its initial closed state, so that the opening force (F) is transferred by the device (8) to said mesh inlay (4), thereby deforming the mesh inlay (4) and causing a compression of the respective foam insert part(s) (2a, 2b), such that a separation opening (6) is created in the insert (2) between said insert parts (2a, 2b);
- inserting conduits (7), in particular cables, into said separation opening (6) or removing them therefrom; and
- releasing the device (8) by removing the opening force (F) applied thereto, thus causing the separation opening (6) to automatically close by inherent material recovery properties of the foam, so that the insert (2) returns to its initial closed state.
